# EUROPÄISCHE PATENTSCHRIFT

(11) **EP 0 840 336 B1**
(45) Veröffentlichungstag und Bekanntmachung des Hinweises auf die Patenterteilung: **07.03.2001**
(21) Anmeldenummer: 97117799.3
(22) Anmeldetag: 14.10.1997
(51) Int. Cl.: H01R 3/00, B60Q 1/44, B60R 16/00

(54) **Selbstjustierender Stösselschalter, insbesondere KFZ-Bremslichtschalter**
Self-adjusting tappet-switch, in particular brake ligth switch
Commutateur à poussoir autoréglable, en particulier un contacteur de stop

(30) Priorität: 31.10.1996 DE 19645058
(43) Veröffentlichungstag der Anmeldung: 06.05.1998
(73) Patentinhaber: TRW Automotive Electronics & Components GmbH & Co. KG, 78315 Radolfzell (DE)
(72) Erfinder: Lange, Reinhard, 78343 Gaienhofen (DE); Elting, Ralf, 78315 Radolfzell (DE); Müller, Klaus, 78267 Aach (DE); Huber, Wolfgang, 86489 Deisenhofen (DE)
(74) Vertreter: Eder, Thomas, Dr.-Ing.

(56) Entgegenhaltungen:
- DE-A- 3 527 874
- DE-A- 3 913 774
- DE-C- 4 215 515
- FR-A- 2 441 258
- FR-A- 2 532 105
- GB-A- 2 282 005

## Beschreibung

Die Erfindung betrifft einen selbstjustierenden Stößelschalter, insbesondere KFZ-Bremslichtschalter, mit den Merkmalen des Oberbegriffs des Patentanspruchs 1.

Selbstjustierende Stößelschalter finden insbesondere als Bremslichtschalter Verwendung und gestatten den Ausgleich von Toleranzen zwischen der betreffenden Seite des den Schalter betätigenden Bremspedals und dem Halteblech des Fahrzeugs, in dem eine Öffnung zur Aufnahme und Halterung des Bremslichtschaltergehäuses vorgesehen ist.

Ein bekannter von der Anmelderin gefertigter Schalter weist einen Stößel auf, an dessen Umfang erste Rastelemente vorgesehen sind, welche mit zweiten, an einem Schieber vorgesehenen Rastelementen zusammenwirken. Der Schieber ist verschiebbar im Schaltergehäuse aufgenommen, wobei der Stößel durch das Zusammenwirken der ersten und zweiten Rastelemente im Schieber gehalten ist. Bei der Montage des Schalters im Halteblech des Fahrzeugs wird das Schaltergehäuse von der Oberseite (betrachtet in bezug auf das Bremspedal) des Halteblechs in eine in diesem vorgesehene Aufnahmeöffnung eingesetzt und der Stößel mit seinem Kopf gegen die Oberseite des Bremspedals gedrückt. In dieser Justier- und Montagestellung befindet sich der Stößel in der am weitesten aus dem Schaltergehäuse ragenden Position in Eingriff mit dem Schieber. Wird der Stößelkopf infolge der Anlage an die Oberseite des Bremspedals in Richtung auf die Oberseite des Schaltergehäuses zu bewegt, so wird das System Stößel-Schieber zunächst so weit in das Schaltergehäuse hineinbewegt, bis eine vorbestimmte Schaltposition erreicht ist. Diese ist vorzugsweise durch einen im Gehäuse befindlichen Anschlag für den Schieber definiert. Der Stößel des Schalters ist dabei zumindest so lange ausgebildet, daß diese Schaltposition beim Einsetzen des Schalters in die Aufnahmeöffnung des Halteblechs sicher erreicht wird. Ist der Abstand zwischen Halteblech und der Oberseite des Bremspedals kleiner als der für das Erreichen dieser Schaltposition erforderliche Verschiebeweg des Systems Stößel-Schieber, so wird beim Einsetzen des Schaltergehäuses in die Aufnahmeöffnung durch die Anlage des Stößelkopfs an die Oberseite des Bremspedals ein weiterer Druck auf den Stößel ausgeübt, wodurch die Schwellwertkraft für das rastende Verschieben des Stößels gegenüber dem Schieber überschritten wird und eine selbsttätige Justierung des Stößels erfolgt.

Nach dem vollständigen Einsetzen des Schalters in die Aufnahmeöffnung in diejenige Stellung, in welcher die Oberseite des Schaltergehäuses an der Unterseite des Halteblechs anliegt, wird der Stößelschalter durch eine Drehung um einen vorbestimmten Winkel in der Aufnahmeöffnung fixiert. Hierzu weist das Schaltergehäuse einen oder mehrere Vorsprünge auf, die beim Einsetzen des Schalters in die Aufnahmeöffnung in entsprechende Codierungsausnehmungen ragen und infolge des Verdrehens des Schaltergehäuses um die Längsachse des Schalters das Halteblech hintergreift.

Nachteilig bei diesen Schaltern ist jedoch, daß unter bestimmten Umständen eine ungewollte Verstellung der gewünschten Rastposition zwischen Stößel und Schieber auftreten kann. Dies kann beispielsweise durch eine Wärmeausdehnung von Schalterkomponenten oder eine Abnützung der Rastbereiche verursacht sein. Auch ein Hantieren im Bereich des Schalters kann zu einer unbeabsichtigten Verstellung der gewünschten Rastposition (nach erfolgter Selbstjustierung) führen. Hierdurch ergibt sich eine Verschiebung des Schaltpunkts, so daß das Bremslicht erst ab einer bestimmten Stellung des Bremspedals eingeschaltet wird, in welcher bereits eine erhebliche Bremswirkung erreicht ist. Vor diesem Schaltpunkt erhält das diesem Fahrzeug nachfolgende Fahrzeug keinerlei Hinweis auf den bereits begonnenen Bremsvorgang.

Die Anmelderin hat daher einen selbstjustierenden und verriegelbaren Stößelschalter entwickelt, wie er in der älteren, nicht vorveröffentlichten deutschen Patentanmeldung 196 03 135.4 beschrieben ist. Bei diesem Schalter kann das System Stößel-Schieber durch eine Verdrehung des Stößels um seine Längsachse aus einer Justierposition in eine verriegelte Position überführt werden, in welcher ein rastendes Verschieben des Stößels gegenüber dem Schieber nicht möglich ist.

Bei diesem Schalter hat sich jedoch als Nachteil erwiesen, daß die Montage bzw. das Verriegeln des Schalters durch die erforderliche Verdrehung des Stößels gegenüber dem Schieber dann einen zusätzlichen Arbeitsgang erfordert, wenn beim Einsetzen des Schalters in die Montageöffnung die betreffende Person nicht ohne weiteres gleichzeitig eine Drehung des Stößels bewirken kann, beispielsweise weil der Stößel nach dem Einsetzen des Schalters und dem Selbstjustiervorgang von der Montageseite her nicht mehr zugänglich ist. In jedem Fall erfordert das Drehen des Stößels einen zusätzlichen Angriff bzw. eine zusätzliche Aktion und erhöht damit den Montageaufwand.

Der Erfindung liegt daher aus den von dem eingangs genannten Stand der Technik die Aufgabe zugrunde, einen selbstjustierenden Stößelschalter zu schaffen, bei dem eine unbeabsichtigte Dejustierung des Systems Stößel-Schalter sicher vermieden wird und der gleichzeitig auf einfache Weise montierbar ist.

Die Erfindung löst die Aufgabe mit den Merkmalen des Patentanspruchs 1.

Die Erfindung geht von der Erkenntnis aus, daß die Montageöffnung zur Aufnahme des Schalters und des Querschnitts des Stößels bzw. Schiebers so ausgebildet ist, daß nach dem vollständigen Einsetzen des Schaltergehäuses in die Montageöffnung entweder der Stößel oder der Schieber drehfest in der Aufnahmeöffnung und das jeweils andere Teil (Schieber oder Stößel) drehfest im Gehäuse gehalten ist. Durch eine einfache Drehung des Schaltergehäuses um einen vorbestimmten Winkel kann dann eine Verriegelung des Systems Stößel-Schieber erfolgen.

Dies wirkt sich insbesondere dann vorteilhaft hinsichtlich eines geringen Montageaufwands aus, wenn der Schalter, gemäß der bevorzugten Ausführungsform der Erfindung, am Gehäuse vorgesehene erste Befestigungsmittel aufweist, welche durch eine Drehung mit an dem Montageteil vorgesehenen zweiten Befestigungsmitteln in Eingriff bringbar sind. In diesem Fall wird durch die Drehung des Schaltergehäuses sowohl eine Verriegelung des Systems Stößel-Schieber als auch gleichzeitig die Arretierung des Schaltergehäuses in der Aufnahmeöffnung des Montageteils bewirkt.

Nach einer Ausführungsform der Erfindung weisen Stößel bzw. Schieber erste und zweite Befestigungsmittel auf, die ein rastendes Verschieben eines der beiden Elemente gegenüber dem anderen Element in der die Montage- und Justierstellung definierenden Winkelposition ermöglicht.

Bei dieser Ausführungsform der Erfindung wird das System Stößel-Schieber vorzugsweise von einem federnden Element derart beaufschlagt, daß das System Stößel-Schieber aus einer Ruhestellung auslenkbar ist, wobei das federnde Element so ausgelegt ist, daß eine rastende Verstellung erst dann erfolgt, wenn der Schieber eine vorbestimmte Schaltstellung erreicht hat. Diese wird vorzugsweise durch einen innerhalb des Gehäuses vorgesehenen Anschlag für den Schieber definiert.

Auf diese Weise befindet sich der Schieber nach der Montage und nach selbsttätiger Justierung des Stößels in einer gegen den Anschlag bewegten Schaltposition, so daß eine Betätigung der betreffenden im Schalter vorgesehenen Kontakte dann erfolgt, wenn der Stößel und damit das System Stößel-Schieber um einen vorbestimmten Schaltweg aus dieser Schaltstellung herausbewegt wird. Bei der Verwendung als Bremslichtschalter erfolgt dies bei einer Betätigung des Bremspedals. Hierbei ist zu beachten, daß derartige Schalter an einem Hebel des Bremspedals angeordnet sind, der sich bei einer Betätigung des Bremspedals in eine Richtung bewegt, die den Abstand zwischen dem Schalter und der betreffenden Ober- bzw. Unterseite des Hebels des Bremspedals vergrößert. Mit anderen Worten, bei einem Betätigen des Bremspedals wird der Stößel des Schalters infolge der Beaufschlagung mit einem federnden Element aus dem Schaltergehäuse herausbewegt.

In einer Ausführungsform der Erfindung ist das mit dem Gehäuse drehfest verbundene Teil (Schieber oder Stößel) so ausgebildet, daß es in der Ruhestellung des Systems Stößel-Schalter in der Montageöffnung oder einer separaten Öffnung des Montageteils drehfest mit dem Montageteil verbunden ist. Auf diese Weise wird ein Verdrehen des Schaltergehäuses nur dann ermöglicht, wenn das System Stößel-Schieber tatsächlich so weit in den Schalter hineinbewegt ist, bis die drehfeste Verbindung dieses Teils mit dem Montageteil aufgehoben ist. Das mit dem Gehäuse drehfest verbundene Teil (Schieber oder Stößel) ist dabei vorzugsweise so ausgebildet, daß es eine Verdrehung des Schaltergehäuses erst dann ermöglicht, wenn sich der Schieber in der Schaltstellung befindet, die er nach der Montage des Schalters einnehmen soll.

Hierzu kann beispielsweise der Schieber an seinem Umfang eine in Längsrichtung ausgebildete Nase aufweisen, die in eine entsprechende Codierungsausnehmung in der Montageöffnung eingreift, wobei die Oberkante der Nase so angeordnet ist, daß eine Drehung des Schaltergehäuses und damit eine Drehung des mit dem Schaltergehäuse drehfest verbundenen Schiebers erst dann freigegeben wird, wenn sich der Schieber zumindest annähernd in der gewünschten Schaltstellung befindet.

In einer anderen Ausführungsform der Erfindung ist der Schieber in der Montage- und Justierstellung des Systems Stößel-Schieber von einem federnden Element beaufschlagt und in einer vorbestimmten Schaltstellung gehalten. Die Verbindung zwischen Stößel und Schieber in der Montage- und Justierstellung, die zumindest ab einer bestimmten auf das System wirkenden Kraft dessen Justierung ermöglichen soll, ist dabei so auf die Beaufschlagungskraft des federnden Elements abgestimmt, daß das Verschieben des Stößels gegen den Schieber in der Montage- und Justierstellung ohne ein Auslenken des Schiebers aus der Schaltstellung erfolgt. Stößel und Schieber können hierzu vorzugsweise so ausgebildet sein, daß in der Montage- und Justierstellung ein gleitendes Verschieben von Stößel und Schieber ermöglicht ist.

Die gewünschte Schaltstellung des Schiebers wird vorzugsweise durch einen Anschlag definiert, der nur in der Montage- und Justierstellung wirksam ist und der nach dem Verdrehen des Schaltergehäuses mit dem Verriegeln des Systems Stößel-Schalter das Herausbewegen des Schiebers aus der Schaltstellung zur Aktivierung/Deaktivierung der Kontakte gestattet.

Im Unterschied zu den eingangs erläuterten Ausführungsformen der Erfindung begrenzt dieser Anschlag jedoch die Bewegung des Schiebers in der entgegengesetzten Richtung, d.h. in der Richtung, in welcher der Stößel aus dem Schalter herausbewegt wird.

Ein derartiger Anschlag wird bei der bevorzugten Ausführungsform der Erfindung durch ein drehfest in einer Ausnehmung im Montageteil gehaltenes Distanzstück gebildet, in welchem der Stößel koaxial geführt ist.

Das Distanzstück und der Schieber weisen vorzugsweise Vorsprünge und/oder Ausnehmungen auf, welche (in der Verschieberichtung des Stößels) derart zusammenwirken, daß in der Justier- und Montagestellung der Schieber in der Schaltstellung gehalten ist und daß in der verriegelten Stellung die Vorsprünge und/oder Ausnehmungen ineinandergreifen und die Bewegung des Schiebers aus der Schaltstellung zur Aktivierung/Deaktivierung der Kontakte freigeben.

Bei der bevorzugten Ausführungsform der Erfindung wird der Stößel von einem federnden Element derart beaufschlagt, daß er in der Richtung aus dem Schaltergehäuse herausbewegt wird, wobei der Stößel vorzugsweise einen Anschlag zur Begrenzung dieser Bewegung aufweist.

Die vorgenannten Ausführungsformen der Erfindung, bei denen der Schieber während der Justierung des Systems Stößel-Schieber in der vorbestimmten Schaltstellung gehalten ist, ergibt sich der Vorteil, daß auf einfache Weise eine Zerstörung oder Beschädigung des Schalters vermieden werden kann, wenn der Stößel und damit auch der Schieber nach dem Verriegeln des Systems Stößel-Schieber durch eine Fehlbetätigung nochmals weiter in das Schaltergehäuse hineinbewegt wird. Hierzu muß lediglich ein ausreichender Verschiebeweg für den Schieber innerhalb des Gehäuses vorgesehen sein. Mit anderen Worten, die Schaltstellung des Schiebers darf nicht durch einen weiteren Anschlag begrenzt werden, so daß eine Bewegung des Schiebers in das Gehäuse hinein blockiert wird.

Weitere Ausführungsformen der Erfindung ergeben sich aus den Unteransprüchen. Die Erfindung wird nachfolgend anhand in der Zeichnung dargestellter Ausführungsbeispiele näher erläutert. In der Zeichnung zeigen:
- Fig. 1: einen Längsschnitt durch ein erstes Ausführungsbeispiel eines Schalters nach der Erfindung entlang der Linie I-I der Draufsicht in Fig.2;
- Fig. 2: eine Draufsicht auf den in einem Montageteil eingesetzten Schalter gemäß Fig. 1;
- Fig. 3: einen Längsschnitt entlang der Linie II-II in Fig. 2;
- Fig. 4a: eine perspektivische Darstellung eines weiteren Ausführungsbeispiels eines Schalters nach der Erfindung;
- Fig. 4b: die Kontur einer Montageöffnung für den Schalter gemäß Fig. 4a;
- Fig. 5: einen Längsschnitt durch den Schalter gemäß Fig. 4a in der Justier- und Montagestellung des Systems Stößel-Schieber und
- Fig. 6: einen Längsschnitt durch den Schalter gemäß den Fig. 4 und 5 in der montierten Stellung.

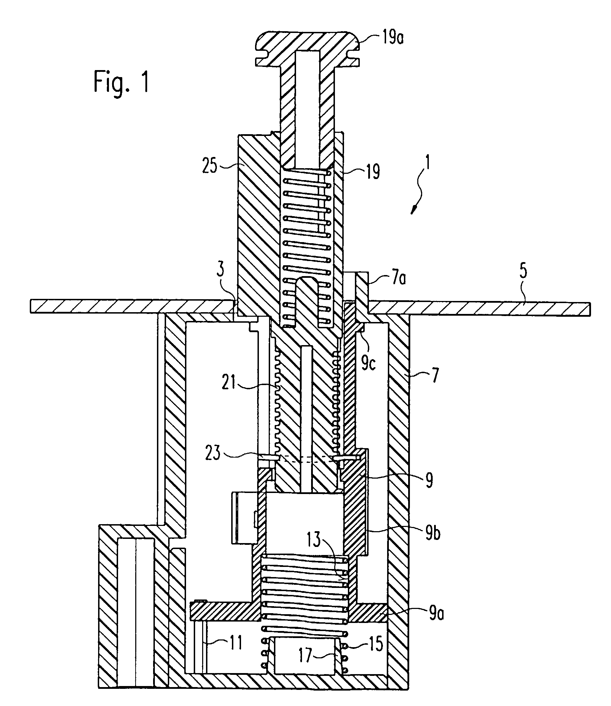

Das in den Fig. 1 bis 3 dargestellte erste Ausführungsbeispiel der Erfindung zeigt einen Stößelschalter 1, der in einer Montageöffnung 3 eines Montageteils 5, beispielsweise einem Halteblech in einem KFZ, montiert ist. Der Stößelschalter 1 weist ein Gehäuse 7 auf, das mit einem Fortsatz 7a an der Oberseite des Gehäuses 7 in die Montageöffnung 3 eingreift, wobei der Fortsatz 7a bzw. die Montageöffnung 3 so ausgebildet sind, daß nach dem Einsetzen des Stößelschalters 1 bzw. des Gehäuses 7 in die Montageöffnung 3 eine Drehung des Schaltergehäuses 7 um die Längsachse des Stößelschalters 1 ermöglicht ist.

Innerhalb des Gehäuses 7 ist ein Schieber 9 vorgesehen, der in der Längsachse des Stößelschalters 1 verschiebbar geführt ist. Hierzu kann der Schieber 9, wie in Fig. 1 dargestellt, ein Fußteil 9a aufweisen, welches seitlich durch die Innenwandungen des Gehäuses 7 geführt ist. Zusätzlich kann das Fußteil 9a eine Ausnehmung aufweisen, die zur Aufnahme eines in der Richtung der Längsachse eines Schalters verlaufenden Stifts 11 dient, welcher eine zusätzliche Führung des Schiebers 9 ermöglicht.

Das Fußteil 9a weist bodenseitig eine Ausnehmung 13 auf, die zur Aufnahme eines oberen Bereichs einer Schraubenfeder 15 dient. Die Schraubenfeder 15 stützt sich mit ihrem oberen Ende an der oberen Innenwandung der Ausnehmung 13 und mit ihrem unteren Ende gegen den Boden des Gehäuses 7 ab. Zur Halterung und Führung der Schraubenfeder 15 kann am Boden des Gehäuses 7 ein beispielsweise hohlzylindrischer Fortsatz 17 ausgebildet sein, welcher in den Innenraum der Windungen der Schraubenfeder 15 eingreift.

Die Schraubenfeder 15 beaufschlagt auf diese Weise den Schieber 9 derart, daß dieser mit einem an seinem oberen Ende vorgesehenen, beispielsweise ringförmigen Vorsprung 19 gegen die Innenwand des Deckelbereichs des Gehäuses 7 gedrückt wird. Der ringförmige Vorsprung 19 dient somit als Anschlag zur Begrenzung des Verschiebewegs des Schiebers 9.

Am Schieber 9 sind, vorzugsweise in dessen unterem Bereich 9b, ein oder mehrere nicht näher dargestellte Kontaktelemente eines oder mehrerer Kontakte angeordnet.

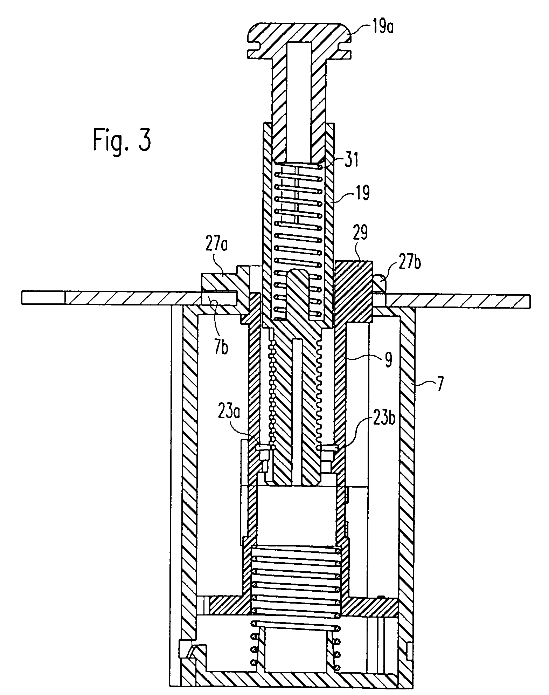

Der Schieber 9 ist im wesentlichen hohlzylindrisch ausgebildet, wobei ein Stößel 19 von oben in den Schieber 9 eingreift. Der Stößel 19 weist in dem Bereich, der in den Schieber 9 eingreift, Rastmittel 21 auf, die, wie in den Fig. 1 und 3 dargestellt, als umlaufende Verzahnung ausgebildet sein können.

Die Verzahnung 21 wirkt mit einem zumindest teilweise innerhalb des Schiebers 9 angeordneten Eingriffsteil 23 zusammen, welches, wie im Ausführungsbeispiel dargestellt, als Feder mit zwei federnden Armen 23a ausgebildet sein kann (Fig. 3).

Der Querschnitt des Stößels im Bereich der Rastmittel 21 ist dabei so ausgebildet, daß die federnden Arme 23a des Eingriffsteils 23 in einer ersten Winkelstellung zwar in die Rastmittel 21 eingreifen, wobei jedoch zwischen der Außenseite der Rastmittel 21 und der Innenwandung des Schiebers ein ausreichender Ringraum gegeben ist, um ein rastendes Verschieben des Stößels 19 gegenüber dem Schieber 9 zu ermöglichen. Mit anderen Worten, der Ringraum ist groß genug, um eine radiale Bewegung der federnden Arme 23 nach außen zu ermöglichen, so daß die federnden Arme 23 über die Rastzähne der Rastmittel 21 bewegt werden können. Diese Winkelstellung definiert die Justier- und Montagestellung des Schalters 1 bzw. des Systems Stößel-Schieber und ist sowohl in Fig. 1 als auch in Fig. 3 dargestellt.

Bei einer Drehung des Stößels 19 um seine Längsachse um einen vorbestimmten Winkelbetrag werden die federnden Arme 23a infolge des in dieser Winkelstellung größeren Querschnittsdurchmessers so weit radial nach außen bewegt, daß nur noch ein geringfügiger Ringraum zwischen der Außenwandung des Stößels 19 im Bereich der Rastmittel 21 und der Innenwandung des Schiebers 9 verbleibt. Dieser Ringraum ist so gering, daß eine radiale Bewegung der federnden Arme 23 nach außen gänzlich blockiert oder aber zumindest so weit verringert ist, daß die federnden Arme 23a nicht mehr über die Spitzen der Rastzähne hinweggleiten können. Somit tritt in dieser Winkelstellung eine Verriegelung des Systems Stößel-Schieber auf.

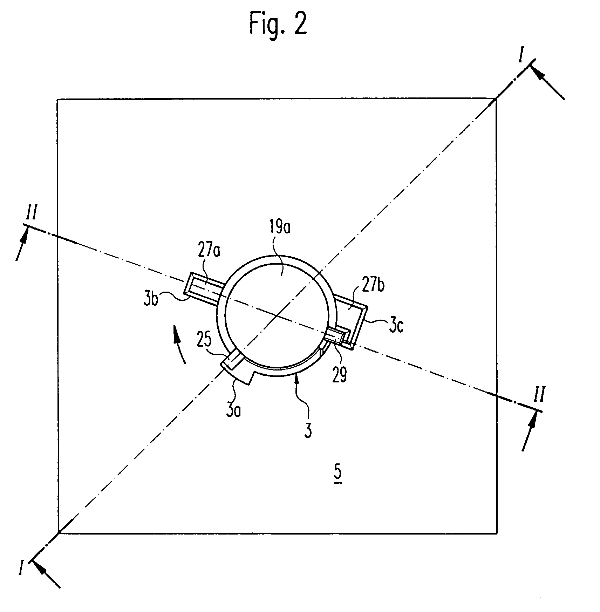

Um auf möglichst einfache Art und Weise eine Verdrehung des Stößels 19 gegenüber dem Schieber 9 zu ermöglichen, ist an der Außenwandung des Stößels 19 eine in Betätigungsrichtung des Stößels bzw. Längsachse des Schalters verlaufende Nase 25 vorgesehen (Fig. 1), welche mit einer entsprechenden Codierungsausnehmung 3a (Fig. 2) der Montageöffnung 3 im Montageteil 5 zusammenwirkt.

Wie aus den Fig. 1 und 2 ersichtlich, wird bei einem Einsetzen des Stößelschalters 1 in die Montageöffnung 3 der Stößel 19 durch den Anschlag der Nase 25 an der Seitenwandung der Codierungsausnehmung 3a drehfest in der Montageöffnung 3 gehalten. Dies gilt zumindest für eine Drehung in Pfeilrichtung gemäß Fig. 2.

Um zu gewährleisten, daß der Schalter nur in einer einzigen definierten Stellung in die Montageöffnung 3 einsetzbar ist, sind am Fortsatz 7a des Gehäuses 7 Befestigungsmittel 27a, 27b vorgesehen, die im Sinne eines definierten Einsatzes des Schalters 1 in die Montageöffnung 3 mit entsprechenden Codierungsausnehmungen 3b und 3c in der Montageöffnung 3 zusammenwirken. Wie aus den Fig. 2 und 3 ersichtlich, sind die Befestigungsmittel 27a, 27b als sich radial vom Fortsatz 7a nach außen erstreckende Nasen ausgebildet, welche ein Aufnehmen des Montageteils zwischen der Unterseite der Befestigungsmittel 27a, 27b und der Oberseite der Schulter 7b des Gehäuses 7 ermöglichten. Die Schulter 7b wirkt dabei gleichzeitig als Anschlag für das Einsetzen des Gehäuses 7 in die Montageöffnung 3.

Mit Hilfe der Befestigungsmittel 27a, 27b kann der Stößel-schalter 1 somit in einer definierten Winkelstellung in die Montageöffnung eingesetzt werden, wobei die Befestigungsmittel 27a, 27b von unten durch die Codierungsausnehmungen 3b und 3c geschoben werden. Bei einem Verdrehen des Schaltergehäuses 7 in Pfeilrichtung gemäß Fig. 2 hintergreifen die Befestigungsmittel 27a, 27b das Montageteil, wodurch der Schalter mit dem Montageteil 5 verbunden ist.

Gleichzeitig wird bei einer derartigen Drehung des Gehäuses 7 der Stößel 19 durch das Zusammenwirken der Nase 25 mit der Codierungsausnehmung 3a drehfest in der Montageöffnung 3 gehalten, so daß sich in der vorstehend beschriebenen Weise eine Verriegelung des Systems Stößel-Schieber ergibt.

Bei einem Einsetzen des Stößelschalters 1 in die Montageöffnung 3 wird dieser mit dem Kopf 19a des Stößels gegen die betreffende Seite eines Betätigungselements, beispielsweise eines Bremspedals, gedrückt. Um einen Toleranzausgleich zu ermöglichen, wird der Schalter 1 in dem Zustand in die Montageöffnung 3 eingeschoben, in dem der Stößel 19 sich in seiner obersten Raststellung befindet, d.h. am weitesten aus dem Gehäuse 7 herausragt. Der Abstand zwischen dem Montageteil und der betreffenden Seite des (nicht dargestellten) Betätigungselements muß für das Gewährleisten einer Selbstjustierung des Schalters kleiner sein als der Abstand zwischen der Schulter 7b des Gehäuses 7 und der Oberseite des Kopfes 19a des Stößel 19. Ist dies der Fall, so wird bei einem Einsetzen des Schalters in die Montageöffnung der Kopf 19a die Unterseite des Betätigungselements berühren, bevor die Schulter 7b des Gehäuses 7 an der Unterseite des Montageteils 5 anliegt. Bei einem weiteren Einschieben des Gehäuses 7 in die Montageöffnung 5 wird als Folge das Gesamtsystem Stößel-Schieber zunächst so weit in den Schalter hineinbewegt, bis der Schieber eine definierte Schaltstellung erreicht hat. Diese wird vorzugsweise dadurch definiert, daß das Fußteil 9a des Schiebers 9 gegen einen Anschlag beispielsweise den Boden des Gehäuses 7 bewegt wird. Wird dann nach Erreichen dieser Schaltstellung das Gehäuse noch weiter in Richtung auf das Betätigungselement zu bewegt, so ermöglicht die Justier- und Montagestellung des Systems Stößel-Schieber ein rastendes Verschieben so lange, bis die Schulter 7b des Gehäuses 7 an der Unterseite des Montageteils 5 anliegt. In dieser Stellung kann nunmehr in der vorstehend beschriebenen Weise eine Drehung des Gehäuses 7 bei drehfest gehaltenem Stößel 19 erfolgen, wodurch zum einen eine Arretierung des Gehäuses 7 in der Montageöffnung 3 und zum anderen ein Verriegeln des System Stößel-Schalter erfolgt.

Wie aus Fig. 3 ersichtlich, weist der Schalter gemäß diesem ersten Ausführungsbeispiel noch die Besonderheit auf, daß auch der Schieber 9 in seinem oberen Bereich eine Nase 29 aufweist, welche mit einer Codierungsausnehmung der Montageöffnung 3 zusammenwirkt. Im gezeigten Ausführungsbeispiel ist dies die Codierungsausnehmung 3c, welche bereits zur Aufnahme der Befestigungsmittel 27b für die Arretierung des Schaltergehäuses dient. Die Nase 29 blockiert somit die Drehung des Schaltergehäuses 7 so lange, bis der Schieber 9 so weit in das Gehäuse 7 hineingeschoben ist, daß die Oberkante der Nase 29 unterhalb der Unterseite des Montageteils 5 zu liegen kommt. Dieser Weg (und damit die Länge und Position der Oberkante der Nase) ist vorzugsweise so auszulegen, daß eine Freigabe der Drehbewegung des Gehäuses 7 durch ein Nachinnenbewegen der Nase 29 erst bei oder kurz vor Erreichen der gewünschten Schaltstellung des Schiebers 9 erfolgt.

Um nach dem Verdrehen des Gehäuses 7 bei einer Betätigung des Betätigungselements (dieses wird hierbei vom Montageteil 5 wegbewegt) eine entsprechende Schaltbewegung des Schiebers 9 zu ermöglichen, muß in der verdrehten Position, d.h. der verriegelten Stellung des Systems Stößel-Schalter die Nase 29 wiederum mit einer entsprechenden Codierungsausnehmung zusammenwirken, da ansonsten die Schaltbewegung des Schiebers durch die Unterseite des Montageteils 5 begrenzt und somit ggf. verhindert würde. Bei dem dargestellten Ausführungsbeispiel erfolgt die Montage und Verriegelung des Schalters durch eine Drehung des Gehäuses und des damit drehfest verbundenen Schiebers mit der Nase 29 um einen Betrag von ca. 90°. In der verdrehten Stellung wird damit eine Schaltbewegung des Schiebers durch die Codierungsausnehmung 3a freigegeben, die zu diesem Zweck mindestens so breit ausgebildet ist, daß zusätzlich zur Nase 25 des Stößels 19 auch die Nase 29 des Schiebers 9 darin Platz findet.

Selbstverständlich kann jedoch zu diesem Zweck auch eine separate Codierungsausnehmung vorgesehen sein.

Um bei einem Überhub des Betätigungselements in einer der normalen Schaltbewegung entgegengesetzten Richtung, d.h. bei einer Bewegung in Richtung auf das Montageteil 5 zu, eine Beschädigung oder Zerstörung des Schalters zu vermeiden, ist bei der in den Fig. 1 bis 3 dargestellten Ausführungsform im Stößel 19 eine Nachlauffunktion integriert. Hierzu ist der Kopf 19a verschiebbar im Stößel gehalten und von einer Schraubenfeder 31 beaufschlagt. Selbstverständlich ist der Verschiebeweg des Kopfs 19a durch einen nicht näher dargestellten Anschlag begrenzt. Die Schraubenfeder 31 ist dabei so ausgelegt, daß ein Nachlauf, d.h. ein Nachinnenbewegen des Kopfes 19a in dem Stößel 19 erst dann erfolgt, wenn der Schieber 9 bereits die gewünschte Schaltstellung (Normalstellung des Schiebers bei nicht betätigtem Betätigungselement) erreicht hat und (bei der Montage des Schalters) die Selbstjustierung erfolgt ist. Bei einem Bremspedal kann eine derartige Bewegung des verriegelten Systems Stößel-Schieber beispielsweise dadurch auftreten, daß mit einer als Sicherungsvorrichtung oder Diebstahlsperre wirkenden Kralle zur Verbindung des Lenkrads mit dem Bremspedal der vordere Hebel des Bremspedals in Richtung auf das Lenkrad zu bewegt wird, wobei der rückwärtige Hebelteil des Bremspedals, der mit dem Stößelschalter zusammenwirkt, den Kopf 19a des Stößels 19 entsprechend beaufschlagt.

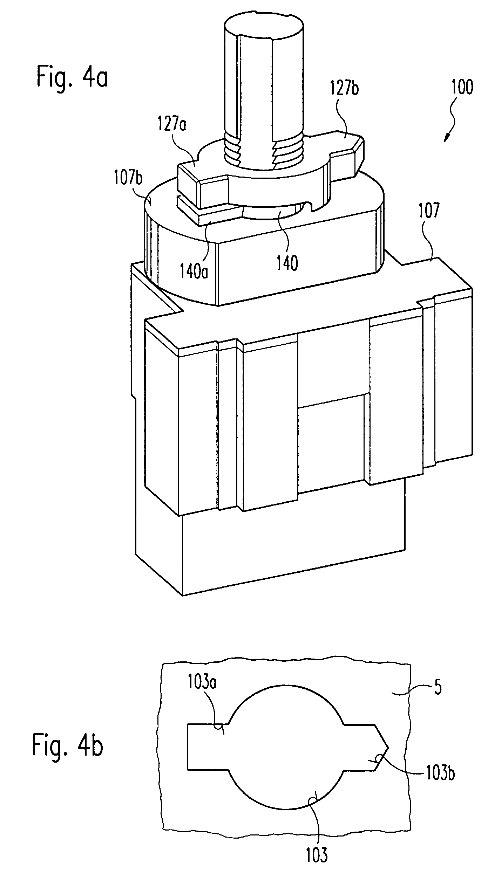

Nachfolgend wird das in den Fig. 4 bis 6 dargestellte weitere Ausführungsbeispiel der Erfindung erläutert.

Die perspektivische Ansicht gemäß Fig. 4a zeigt einen Stößel-schalter 100 mit einem Gehäuse 107, das wiederum eine Schulter 7b als Anschlag für das Einsetzen des Gehäuses 7 in eine Montageöffnung 103 (Fig. 4b) eines Montageteils 5 dient.

Der Stößelschalter 101 weist wiederum Befestigungsemittel 127a, 127b auf, welche für das Arretieren des Schalters im Montageteil 5 dienen. Die Montageöffnung 103 weist hierzu wiederum entsprechend geformte Codierungsausnehmungen 103a, 103b auf, so daß der Schalter wiederum von unten mit den Befestigungsmitteln 127a, 127b durch die Montageöffnung 103 geschoben werden kann, bis die Schulter 107b an der Unterseite des Montageteils 5 anliegt. In dieser Stellung kann der Schalter durch ein Verdrehen des Schaltergehäuses mit dem Montageteil 5 verbunden bzw. arretiert werden.

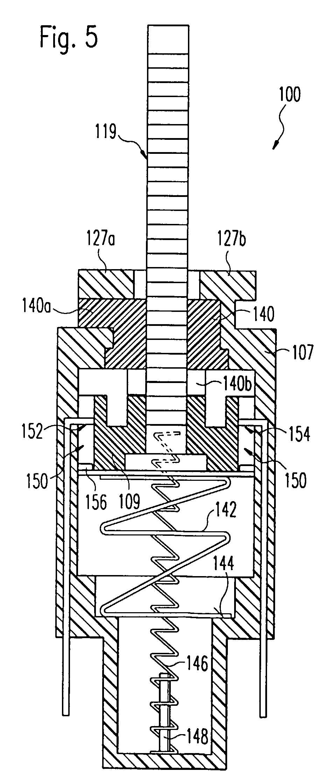

Wie aus den Fig. 4a und 5 ersichtlich, ist im oberen Bereich des Gehäuses 107 ein gegenüber dem Gehäuse drehbares Distanzstück 140 vorgesehen, welches eine Nase 140a aufweist, die ebenfalls im wesentlichen der Form der Codierungsausnehmung 103a entspricht.

Für das Einschieben des Schalters 100 in die Montageöffnung 103 des Montageteils 5 wird das Distanzstück 140 gegenüber dem Gehäuse 107 so gedreht, daß die Nase 140a im wesentlichen mit dem Befestigungsmittel 127a fluchtet. Damit greift die Nase 140a in die Codierungsausnehmung 103a ein, wenn das Gehäuse 107 mit seiner Schulter 107b an der Unterseite des Montageteils 5 anliegt.

Der Stößel 119 ist koaxial zur Drehachse des Distanzstücks 140 gegenüber dem Gehäuse 107 durch eine entsprechende Ausnehmung im Distanzstück 140 verschiebbar geführt. Der Querschnitt des Stößels und der Ausnehmung im Distanzstück 140 sind dabei so gewählt, daß der Stößel 119 drehfest im Distanzstück 140 gehalten ist. Somit erfolgt bei einer drehfesten Halterung des Distanzstücks 140 mittels der Nase 140a in der Codierungsausnehmung 103a auch eine drehfeste aber in der Schalterlängsachse verschiebbare Lagerung des Stößels 119 im Distanzstück 140.

Hierdurch wird wiederum erreicht, daß bei einem Verdrehen des Gehäuses 107 des Schalters 100 auch eine Verdrehung und hierdurch bewirkte Verriegelung des Systems Stößel-Schalter einhergeht.

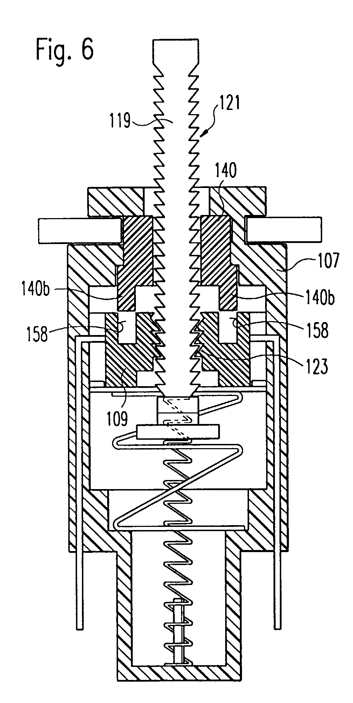

Um eine Verriegelung zu ermöglichen, weist der Stößel, vorzugsweise an gegenüberliegenden Längsseiten, Rastmittel 121 auf, die, wie in Fig. 6 dargestellt, als sägezahnförmige Rastverzahnung ausgebildet sein kann. Die Rastmittel 121 wirken mit komplementären Eingriffsmitteln 123 zusammen, die an der Innenwandung des im wesentlichen ringförmig ausgebildeten Schiebers 109 vorgesehen sind. Bei nicht-verriegeltem System Stößel-Schieber wird ein gleitendes Verschieben des Stößels gegenüber dem Schieber ermöglicht, indem die Rastmittel 121 außer Eingriff mit den komplementären Eingriffsmitteln 123 gebracht werden.

Für das Montieren des Stößelschalters 100 in der Montageöffnung 103 werden Stößel 119 und Distanzstück 140 in die in den Fig. 4a und 5 dargestellte Justier- und Montagestellung gebracht, wobei in der das gleitende Verschieben des Stößels 119 gegenüber dem Schieber 109 möglich ist.

In dieser Position befindet sich der Schieber bereits in der gewünschten, in den Fig. 5 und 6 dargestellten Schaltstellung. Diese wird durch die beiden Fortsätze 140b an der Unterseite des Distanzstücks 140 definiert, wobei der Schieber 109 mit seiner Oberseite durch die Beaufschlagung mittels der Feder 142 gegen die Anschlagsflächen der Fortsätze 140b gedrückt wird. Die Feder 142 beaufschlagt hierzu einerseits die Unterseite des Schiebers 109 und andererseits eine Schulter 144 im unteren Bereich des Gehäuses 107.

Des Weiteren ist eine weitere Feder 146 vorgesehen, welche mit ihrem oberen Ende in einer Ausnehmung in der Unterseite des Stößels 119 aufgenommen ist und welche mit dem anderen Ende den Boden des Gehäuses 107 beaufschlagt. Am Boden des Gehäuses 107 kann die Feder 146 mittels eines Stifts 148 gehalten sein.

Die in Fig. 5 dargestellte Schaltstellung des Schiebers 109 ist so gewählt, daß nach einem Wegfall der Anschlagwirkung der Fortsätze 140b (nachstehend erläutert) ein ausreichender Schaltweg für das Betätigen eines Kontakts 150 entsteht. Der Kontakt 150 besteht dabei aus zwei Kontaktelementen 152, 154, welche mittels eines elektrisch leitenden Elements 156 an der Unterseite des Schiebers 109 verbunden werden können.

Beim Einsetzen des Schalters 100 in die Montageöffnung 103 wird zunächst der Kopf des Stößels mit der betreffenden Seite eines Betätigungselements in Kontakt gebracht. Daraufhin wird der Schalter so weit in Richtung auf das Betätigungselement (nicht dargestellt) zu bewegt, bis die Schulter 107b an der Unterseite des Montageteils 5 anliegt. Bei diesem Vorgang wird der Stößel 5 gleitend relativ zum Schieber 109 verschoben, wobei der Schieber 109 über die Feder 142 in der in Fig. 5 dargestellten Schaltstellung gehalten ist.

Anschließend wird in der bereits beschriebenen Weise das Gehäuse 107 des Schalters um einen vorbestimmten Winkelbetrag, beispielsweise 90°, verdreht und damit das System Stößel-Schieber verriegelt. Diese verriegelte Position ist in Fig. 6 dargestellt. Mit dem Verdrehen des Gehäuses 107 und damit des Schiebers 109 gegenüber dem Distanzstück 140 wird gleichzeitig erreicht, daß die Fortsätze 140b ihre Wirkung als Anschlag verlieren, da sie, wie in Fig. 6 dargestellt, nunmehr entsprechenden Ausnehmungen 158 in der Oberseite des Schiebers 109 gegenüberstehen.

Auf diese Weise wird bei einer Bewegung des (nicht dargestellten) Betätigungselements vom Montageteil 5 weg ein Schaltweg des Schiebers 109 in derselben Richtung ermöglicht. Bei der Verschiebung des Schiebers 109 bzw. des Systems Stößel-Schieber greifen die Fortsätze 140b in die Ausnehmungen 158 ein. Nach Zurücklegen eines gewissen Verschiebewegs werden dann die Kontaktelemente 152, 154 über das elektrisch leitende Elemente 156 leitend verbunden und damit der Kontakt geschlossen.

Bei dem in den Fig. 4 bis 6 dargestellten Schaltertyp kann auf sehr einfache Weise verhindert werden, daß bei einer Bewegung des Betätigungselements entgegen der eigentlichen Betätigungsrichtung (vgl. das vorstehende Beispiel der Betätigung eines Bremspedals mittels einer Diebstahlsicherungsvorrichtung) der Schalter beschädigt oder gar zerstört wird: Hierzu muß lediglich sichergestellt werden, daß dem Schieber bzw. dem System Stößel-Schieber, ausgehend von der in den Fig. 5 und 6 dargestellten Schaltstellung, ein ausreichender Verschiebeweg in die betreffende Betätigungsrichtung (in den Fig. 5 und 6 nach unten) zur Verfügung steht. Bei diesem Schaltertyp ist es somit, anders als bei dem Typ gemäß Fig. 1 bis 3, nicht erforderlich, den Nachlauf durch eine entsprechende Mechanik im Stößel oder dergleichen zu realisieren. Auch ist keine zusätzliche Feder erforderlich.

Wie aus Fig. 6 ersichtlich, ist die sägezahnförmige Rastverzahnung 121 so ausgeführt, das jeder Zahn eine im wesentlichen horizontal verlaufende obere und eine schräg verlaufende untere Fläche aufweist. Die komplementären Eingriffsmittel 123 des Schiebers 109 sind entsprechend ausgebildet. Die Anfangsbereiche jeder der beiden Rastverzahnungen 121 und/oder der Eingriffsmittel 123, die bei einem ersten Aufeinandertreffen während der Drehung des Schiebers 109 zusammen mit dem Gehäuse 107 zur Verriegelung des Systems Stößel-Schieber zusammenwirken sind vorzugsweise so ausgebildet, daß keine Stirnflächen stumpf aufeinandertreffen und die Drehung bzw. das Verriegeln blockiert wird.

Die Anfangsbereiche können hierzu eine im wesentlichen in azimutaler Richung verlaufende Schräge aufweisen, so daß die ansonsten entstehenden im wesentlichen in radialer Richtung verlaufenden Stirnflächen der Anfangsbereiche weitestgehend zu einer "Anfangsschneide" reduziert ist. Die in azimutaler Richtung verlaufende Schräge ist dabei so ausgeführt, daß bei einem Aufeinandertreffen der Anfangsbereiche der Rastverzahnungen 121 und der Eingriffsmittel 123 mit leicht versetzten Verzahnungen der Stößel bei feststehendem Schieber solange in das Schaltergehäuse 107 hineinbewegt wird, bis sich die Verzahnungen in der korrekten komplementären Eingriffsstellung befinden.

Beispielsweise kann hierzu die gemäß Fig. 6 im wesentlichen horizontal verlaufende Unterseite jedes Sägezahns der Eingriffsmittel 123 in dessen Anfangbereich in azimutaler Richtung eine Schräge aufweisen, die von der darüberliegenden schrägen Fläche schräg in Richtung der horizontal verlaufenden Unterseite verläuft.

Gleichzeitig kann die sehr kleine Stirnfläche bzw. stirnseitig "Schneide" jedes Anfangsbereichs eines Sägezahns nicht mehr in radialer Richtung sondern derart schräg verlaufen, daß bei einem Ineinandergreifen der Anfangsbereiche der Verzahnungen von Stößel und Schieber zuerst die radial äußeren Bereiche und erst ab einer gewissen Überlappung der Verzahnungen die einzelnen Zähne voll im Sinne eines vollständigen IneinanderEingreifens zusammenwirken.

Selbstverständlich können anstelle der Unterseiten der Zähne des Schiebers auch die Oberseiten der Zähne des Stößels mit entsprechenden komplementären Schrägen versehen sein.

## Patentansprüche

1. Selbstjustierender Stößelschalter, insbesondere KFZ-Bremslichtschalter, in Verbindung mit einem Montageteil (5) und
a) mit einem in einem Gehäuse (7, 107) geführten Schieber (9, 109) zur Betätigung eines oder mehrerer Kontakte (150) und
b) mit einem gegenüber dem Schieber (9, 109) in Richtung dessen Verschieberichtung verschiebbaren Stößel (19, 119),
**dadurch gekennzeichnet,**
c) daß der Schieber (9, 109) erste Eingriffsmittel (23, 123) und der Stößel (19, 119) zweite Eingriffsmittel (21, 121) aufweisen, mit welchen Schieber und Stößel rastend verbindbar und/oder verriegelbar sind,
d) daß der Stößel (19, 119) oder der Schieber (9, 109) im Querschnitt so geformt sind, daß eines der beiden Teile beim Einsetzen in eine Montageöffnung (3, 103) in einem Montageteil (5) drehfest aber verschiebbar gehalten ist, während das jeweils andere Teil im Gehäuse (7, 107) drehfest aber verschiebbar gehalten ist, und
e) daß die ersten (23, 123) und zweiten (21, 121) Eingriffsmittel so ausgebildet sind, daß der Stößel (19, 119) und der Schieber (9, 109) durch Drehung des Gehäuses (7, 107) aus einer Justier- und Montagestellung, in welcher Stößel und Schieber gegeneinander verschiebbar sind, in eine verriegelte Stellung überführbar sind und umgekehrt.

2. Stößelschalter nach Anspruch 1, **dadurch gekennzeichnet,** daß am Gehäuse erste Befestigungsmittel (27a, 27b; 127a, 127b) vorgesehen sind, welche durch eine Drehung des Gehäuses mit an einem Montageteil (5) vorgesehenen zweiten Befestigungsmitteln in Eingriff bringbar sind.

3. Stößelschalter nach Anspruch 1 oder 2, **dadurch gekennzeichnet,** daß die ersten (23) und zweiten (21) Eingriffsmittel so ausgebildet sind, daß der Schieber (9) und der Stößel (19) in der Montage- und Justierstellung rastend gegeneinander verschiebbar sind.

4. Stößelschalter nach Anspruch 3, **dadurch gekennzeichnet,** daß das System Stößel-Schieber von einem federnden Element (15) derart beaufschlagt ist, daß das System Stößel-Schieber aus einer Ruhestellung auslenkbar ist, wobei das federnde Element (15) so ausgelegt ist, daß eine rastende Verstellung erst dann erfolgt, wenn der Schieber (9) eine vorbestimmte Schaltstellung erreicht hat.

5. Stößelschalter nach Anspruch 4, **dadurch gekennzeichnet,** daß die vorbestimmte Schaltstellung durch einen Anschlag für den Schieber (9) definiert ist.

6. Stößelschalter nach Anspruch 4 oder 5, **dadurch gekennzeichnet,** daß das mit dem Gehäuse (7) drehfest verbundene Teil (Schieber (9) oder Stößel (19)) so ausgebildet ist, daß es in der Ruhestellung des Systems Stößel-Schalter in der Montageöffnung (3) oder einer separaten Öffnung des Montageteils drehfest mit dem Montageteil (5) verbunden und bei einem Verschieben des Systems Stößel-Schieber außer Eingriff mit dem Montageteil (5) bringbar ist und erst hierdurch das Überführen des Systems Stößel-Schalter in die verriegelte Stellung ermöglicht.

7. Stößelschalter nach einem der Ansprüche 1 bis 3, **dadurch gekennzeichnet,** daß der Schieber (109) in der Montage- und Justierstellung des Systems Stößel-Schieber von einem federnden Element (142) beaufschlagt in einer vorbestimmten Schaltstellung gehalten ist und daß das Verschieben des Stößels (119) gegen den Schieber (109) in der Montage- und Justierstellung ohne ein Auslenken des Schiebers erfolgt.

8. Stößelschalter nach Anspruch 7, **dadurch gekennzeichnet,** daß der Stößel (119) in der Montage- und Justierstellung gegenüber dem Schieber (109) gleitend gegen die Kraft eines federnden Elements (146) verschiebbar ist.

9. Stößelschalter nach einem der Ansprüche 6 bis 8, **dadurch gekennzeichnet,** daß die Schaltstellung durch einen nur in der Montage- und Justierstellung wirksamen Anschlag definiert ist.

10. Stößelschalter nach Anspruch 9, **dadurch gekennzeichnet,** daß der Stößel (119) drehfest aber verschiebbar in einem drehfest in der Montageöffnung (103) gehaltenen Distanzstück (140) des Gehäuses (107) gehalten ist, und daß der Anschlag (140a) durch das Distanzstück gebildet ist.

11. Stößelschalter nach Anspruch 10, **dadurch gekennzeichnet,** daß das Distanzstück (140) und der Schieber (109) Vorsprünge (140a) und/oder Ausnehmungen (158) aufweisen, welche derart zusammenwirken, daß in der Justier- und Montagestellung ein Anschlag für den Schieber (109) gebildet ist und daß in der verriegelten Stellung die Vorsprünge und/oder Ausnehmungen ineinandergreifen und die Bewegung des Schiebers aus der Schaltstellung zur Aktivierung/Deaktivierung des oder der Kontakte (150) freigeben.

12. Stößelschalter nach einem der Ansprüche 6 bis 11, **dadurch gekennzeichnet,** daß das Gehäuse (107) so ausgebildet ist, daß eine Bewegung des Systems Stößel-Schieber nach dem Verriegeln in der vom freien Ende des Stößels abgewandten Richtung ermöglicht ist.

## Claims

1. Self-adjusting tappet switch, in particular motor-vehicle brake-light switch, in conjunction with an installation part (5) and
a) with a slide (9, 109) which is guided in a housing (7, 107) and is intended for actuating one or more contacts (150), and
b) with a tappet (19, 119) which can be displaced in relation to the slide (9, 109) in the displacement direction of the latter,
characterized
c) in that the slide (9, 109) has first engagement means (23, 123) and the tappet (19, 119) has second engagement means (21, 121), by means of which the slide and tappet can be connected with latching action and/or locked,
d) in that the tappet (19, 119) or the slide (9, 109) are shaped cross-sectionally such that, upon insertion into an installation opening (3, 103) in an installation part (5), one of the two parts is retained in a rotationally fixed but displaceable manner, while the respectively other part is retained in a rotationally fixed but displaceable manner in the housing (7, 107), and
e) in that the first (23, 123) and second (21, 121) engagement means are designed such that, by virtue of rotation of the housing (7, 107), the tappet (19, 119) and the slide (9, 109) can be transferred from an adjusting and installation position, in which the tappet and slide can be displaced in relation to one another, into a locked position and vice versa.

2. Tappet switch according to Claim 1, characterized in that provided on the housing are first fastening means (27a, 27b; 127a, 127b) which, by virtue of a rotation of the housing, can be brought into engagement with second fastening means, which are provided on an installation part (5).

3. Tappet switch according to Claim 1 or 2, characterized in that the first (23) and second (21) engagement means are designed such that, in the installation and adjusting position, the slide (9) and the tappet (19) can be displaced with latching action in relation to one another.

4. Tappet switch according to Claim 3, characterized in that the tappet/slide system is subjected to the action of a resilient element (15) such that the tappet/slide system can be deflected from a rest position, the resilient element (15) being designed such that latching adjustment only takes place when the slide (9) has reached a predetermined switching position.

5. Tappet switch according to Claim 4, characterized in that the predetermined switching position is defined by a stop for the slide (9).

6. Tappet switch according to Claim 4 or 5, characterized in that the part (slide (9) or tappet (19)) which is connected in a rotationally fixed manner to the housing (7) is designed such that, in the rest position of the tappet/slide system, it is connected in a rotationally fixed manner to the installation part (5), in the installation opening (3) or a separate opening of the installation part, and, with displacement of the tappet/slide system, it can be disengaged from the installation part (5), and it is only this which makes it possible for the tappet/slide system to be transferred into the locked position.

7. Tappet switch according to one of Claims 1 to 3, characterized in that, in the installation and adjusting position of the tappet/slide system, the slide (109) is retained in a predetermined switching position under the action of a resilient element (142), and in that the displacement of the tappet (119) in relation to the slide (109) in the installation and adjusting position takes place without the slide being deflected.

8. Tappet switch according to Claim 7, characterized in that, in the installation and adjusting position, the tappet (119) can be displaced in relation to the slide (109) with sliding action counter to the force of the resilient element (146).

9. Tappet switch according to one of Claims 6 to 8, characterized in that the switching position is defined by a stop which is only active in the installation and adjusting position.

10. Tappet switch according to Claim 9, characterized in that the tappet (119) is retained in a rotationally fixed but displaceable manner in a spacer (140) of the housing (107), said spacer being retained in a rotationally fixed manner in the installation opening (103), and in that the stop (140a) is formed by the spacer.

11. Tappet switch according to Claim 10, characterized in that the spacer (140) and the slide (109) have protrusions (140a) and/or recesses (158), which interact such that, in the adjusting and installation position, a stop is formed for the slide (109), and that, in the locked position, the protrusions and/or recesses interengage and release the movement of the slide from the switching position for activating/deactivating the contact or contacts (150).

12. Tappet switch according to one of Claims 6 to 11, characterized in that the housing (107) is designed such that it is possible for the tappet/slide system to move, following the locking operation, in the direction away from the free end of the tappet.

## Revendications

1. Commutateur à poussoir à ajustement automatique, notamment interrupteur des feux stop d'un véhicule automobile, en liaison avec une partie de montage (5) et comportant
a) un coulisseau (9, 109) guidé dans un boîtier (7, 107) et servant à actionner un ou plusieurs contacts (150), et
b) un poussoir (19, 119) déplaçable par rapport au coulisseau (9, 109) dans la direction de déplacement de ce dernier,
caractérisé en ce que
c) que le coulisseau (9, 109) comporte des premiers moyens d'engrènement (23, 123) et que le poussoir (19, 119) comporte des seconds moyens d'engrènement (21, 121), à l'aide desquels le coulisseau et le poussoir peuvent être reliés et/ou verrouillés par encliquetage,
d) que le poussoir (19, 119) ou le coulisseau (9, 109) sont agencés en coupe transversale de telle sorte que lors de son insertion dans une ouverture de montage (3, 103) située dans une partie de montage (5), l'une des deux parties est retenue avec blocage en rotation, mais avec possibilité de translation, tandis que l'autre partie respective est retenue dans le boîtier (7, 107) avec blocage en rotation, mais avec possibilité de translation, et
e) que les premiers moyens d'engrènement (23, 123) et les seconds moyens d'engrènement (21, 121) sont agencés de telle sorte que le poussoir (19, 119) et le coulisseau (9, 109) peuvent être amenés dans une position verrouillée et inversement sous l'effet d'une rotation du boîtier (7, 107) depuis une position d'ajustement et de montage, dans laquelle le poussoir et le coulisseau peuvent être déplacés l'un par rapport à l'autre.

2. Commutateur à poussoir selon la revendication 1, caractérisé en ce que sur le boîtier sont prévus des premiers moyens de fixation (27a, 27a; 127a, 127b), qui peuvent être amenés en prise, sous l'effet d'une rotation du boîtier, avec des seconds moyens de fixation prévus sur une partie de montage (5).

3. Commutateur à poussoir selon la revendication 1 ou 2, caractérisé en ce que les premiers moyens d'engrènement (23) et les seconds moyens d'engrènement (21) sont agencés de telle sorte que le coulisseau (9) et le poussoir (19) sont déplaçables l'un par rapport à l'autre de manière à s'encliqueter, dans la position de montage et d'ajustement.

4. Commutateur à poussoir selon la revendication 3, caractérisé en ce que le système poussoir-coulisseau est chargé par un élément élastique (15) de telle sorte que le système poussoir-coulisseau peut être dévié à partir d'une position de repos, l'élément élastique (15) étant agencé de telle sorte qu'un déplacement d'encliquetage s'effectue uniquement lorsque le coulisseau (9) a atteint une position de commutation prédéterminée.

5. Commutateur à poussoir selon la revendication 4, caractérisé en ce que la position de commutation prédéterminée est définie par une butée pour le coulisseau (9).

6. Commutateur à poussoir selon la revendication 4 ou 5, caractérisé en ce que la partie (coulisseau (9) ou poussoir (19)), qui est reliée d'une manière bloquée en rotation au boîtier (16), est agencée de telle sorte que cette partie est reliée solidairement en rotation à la partie de montage (5), lorsque le système poussoir-coulisseau est dans la position de repos dans l'ouverture de montage (3) ou dans une ouverture séparée de la partie de montage, et peut être dégagée de la partie de montage (5) lors d'un déplacement du système poussoir-coulisseau et permet de ce fait la venue du système poussoir-coulisseau dans la position verrouillée.

7. Commutateur à poussoir selon l'une des revendications 1 à 3, caractérisé en ce que lorsque le système poussoir-coulisseau est dans la position de montage et d'ajustement, le coulisseau (109) est retenu dans une position de commutation prédéterminée, en étant chargé par un élément élastique (142) et que le déplacement du poussoir (119) contre le coulisseau (109) s'effectue sans déviation du coulisseau, dans la position de montage et d'ajustement.

8. Commutateur à poussoir selon la revendication 7, caractérisé en ce que dans la position de montage et d'ajustement, le poussoir (119) est déplaçable par glissement par rapport au coulisseau (109), à l'encontre de la force d'un élément élastique (146).

9. Commutateur à poussoir selon l'une des revendications 6 à 8, caractérisé en ce que la position de commutation est définie par une butée qui agit uniquement dans la position de montage et d'ajustement.

10. Commutateur à poussoir selon la revendication 9, caractérisé en ce que le poussoir (119) est retenu d'une manière bloquée en rotation, mais avec possibilité de translation, dans une entretoise (140) du boîtier (107), qui est retenue avec blocage en rotation dans l'ouverture de montage (103), et que la butée (140a) est formée par l'entretoise.

11. Commutateur à poussoir selon la revendication 10, caractérisé en ce que l'entretoise (140) et le coulisseau (109) comportent des parties saillantes (140a) et/ou des évidements (158), qui coopèrent de telle sorte que, dans la position d'ajustement et de montage, une butée est formée pour le coulisseau (109) et que dans la position verrouillée, les parties saillantes et/ou les évidements s'emboîtent réciproquement et que le déplacement du coulisseau à partir de la position de commutation est libéré pour l'activation/la désactivation du ou des contacts (150).

12. Commutateur à poussoir selon l'une des revendications 6 à 11, caractérisé en ce que le boîtier (106) est agencé de telle sorte qu'un déplacement du système poussoir-coulisseau est possible après le verrouillage, dans la direction tournée à l'opposé de l'extrémité libre du poussoir.
